# EUROPEAN PATENT APPLICATION

(11) **EP 2 642 669 A1**
(43) Date of publication of application: **25.09.2013**
(21) Application number: 12425059.8
(22) Date of filing: 23.03.2012
(51) Int. Cl.: H04B 5/00, H01P 1/06

(54) **Contact-less system for bidirectionnally transmitting digital data for rotary machines**

(71) Applicant: Asa-rt S.r.l., 10146 Torino (IT)
(72) Inventor: Silvestri, Enrico, 10146 Torino (IT)
(74) Representative: Garavelli, Paolo

(57) **Abstract**

A system (1) is described, for a contact-less transmission of digital data between two mutually-rotating parts of a machine, bidirectionally and without electric continuity between such parts, comprising at least one first contact-less data transmitting unit (3a) and/or at least one second contact-less data transmitting unit (3b), each one of such units (3a, 3b) being composed of at least one pair of plates for a differential and capacitive signal communication (5a, 5a'; 5b, 5b') facing and in relative rotation around a rotation axis (R-R), each one of such plates (5a, 5a'; 5b, 5b') being equipped with at least one first pair (6) of conductive circular paths (6', 6") concentric to such rotation axis (R-R), and with at least one second pair (8) of conductive circular paths (8', 8"), concentric to such rotation axis (R-R), such first pair (6) of conductive paths being independent from such second pair (8) of conductive paths.

## Description

The present invention refers to a contact-less system for bidirectionally transmitting digital data for rotary machines.

The need of transferring data between rotating systems is common to many machines and industrial manufacturing plants, to production control apparata, to test benches for rotary engines and shafts.

In order to comply with such need, the known art proposes data communication systems for rotary machines, without any physical contact: in general, some of such systems are simply based on contacts sliding onto suitable rings, while others are based on magnetic, optical, radio-waves or capacitive-effect technologies. Each one of these typologies of systems, however, has functional deficiencies and/or it is difficult to keep their characteristics in time and/or they require a strong maintenance effort.

In particular, WO03/023731 discloses a contact-less transmission system that exploits the capacitive effect for transmitting data: such system, however, uses a single capacitive link, made as a pair of concentric electrodes, on which signals from both communication sides arrive; these signals are then suitably mixed and modulated on the two sides, in order to be able to coexist on the same capacitive coupling, and are then demodulated and separated on the opposite side.

Therefore, object of the present invention is solving the above prior art problems, by providing a contact-less system for bidirectionally transmitting digital data for rotary machines equipped with separate capacitive links, one for each communication direction, that allows avoiding the signal modulation and, by communicating in base-band, allows reaching transmission frequencies that are well above (up to 2MHz) what has been proposed by the prior art, as required by industrial field buses.

Another object of the present invention is providing a contact-less system for bidirectionally transmitting digital data for rotary machines that allows a bidirectional communication of a field bus with a frequency of 1.5MHz, for example Profibus DP, simultaneously with other six quick digital unidirectional channels, for example encoder channels, up to a frequency of 200kHz.

The above and other objects and advantages of the invention, as will result from the following description, are obtained with a contact-less system for bidirectionally transmitting digital data for rotary machines as claimed in claim 1. Preferred embodiments and non-trivial variations of the present invention are the subject matter of the dependent claims.

It is intended that the claims are an integral part of the present specification.

It will be immediately obvious that numerous variations and modifications (for example related to shape, sizes, arrangements and parts with equivalent functionality) can me made to what is described, without departing from the scope of the invention as appears from the enclosed claims.

The present invention will be better described by some preferred embodiments thereof, provided as a nonlimiting example, with reference to the enclosed drawings, in which:

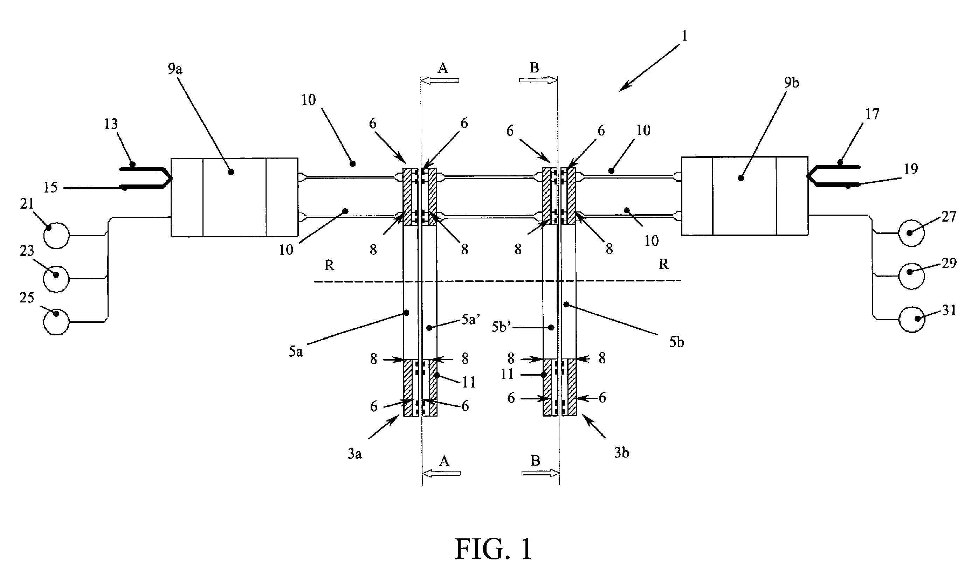

- Figure 1 is a block diagram showing a schematic side view of a preferred embodiment of the contact-less system for bidirectionally transmitting digital data for rotary machines according to the present invention;

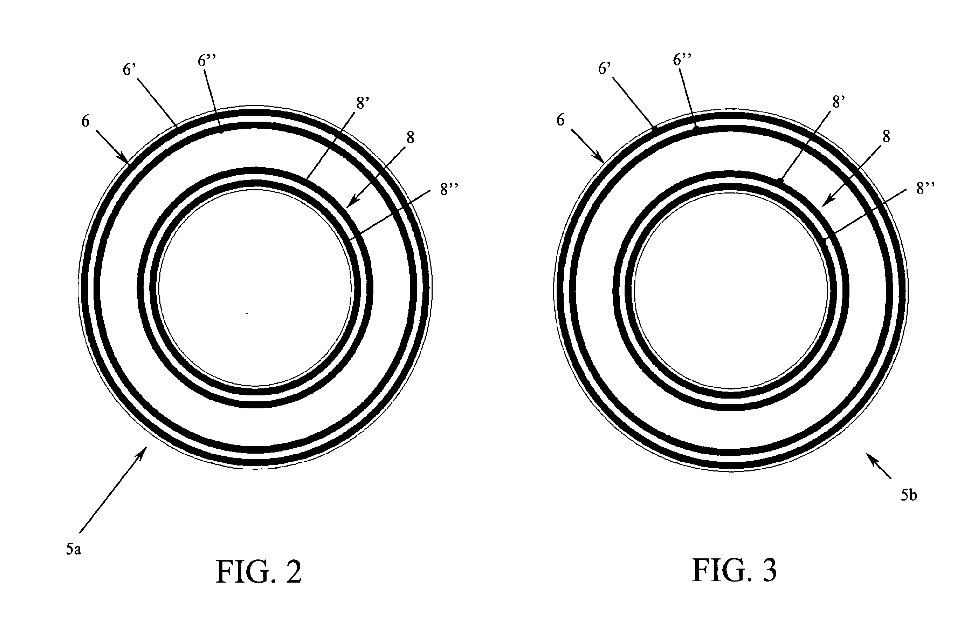

- Figure 2 shows a view of the system according to the present invention according to section plane A-A of Figure 1; and
- Figure 3 shows a view of the system according to the present invention according to section plane B-B of Figure 1.

In general, the system according to the present invention is aimed to allow the transmission of digital data between two mutually-rotating parts of a machine, bidirectionally and without electric continuity between the two parts.

With reference to the Figures, it is possible to note that the contact-less system 1 for bidirectionally transmitting digital data for rotary machines according to the present invention comprises at least one first contact-less data transmitting unit 3a and at least one second contact-less data transmitting unit 3b, each one of such units 3a, 3b being composed of at least one pair of plates for a differential and capacitive signal communication, respectively 5a, 5a' and 5b, 5b', mutually facing and in relative rotation around a rotation axis R-R, each one of such plates 5a, 5a' and 5b, 5b' being equipped with at least one first pair 6 of conductive circular paths 6', 6" concentric to such rotation axis R-R, and with at least one second pair 8 of conductive circular paths 8', 8" concentric to such rotation axis R-R, such first pair 6 of conductive paths being independent from such second pair 8 of conductive paths: obviously, such conductive circular paths 6', 6" of the first pair 6 of plates 5a and 5b are facing corresponding conductive circular paths 6', 6" of the first pair 6 of plates 5a' and 5b'; similarly, such conductive circular paths 8', 8'' of the second pair 8 of plates 5a and 5b are facing corresponding conductive circular paths 8', 8" of the second pair 8 of plates 5a' and 5b'.

The transmission of data signals between the units 3a, 3b therefore exploits the phenomenon of the electric capacity that is formed between two facing electrodes, like in the case of the conductive circular paths 6', 6" and 8', 8" , placed one in front of the other at a certain distance. In order to facilitate the construction, each one of the conductive circular paths 6', 6" e 8', 8" composing an electrode is made of a suitable printed circuit in which such path 6', 6" and 8', 8" is composed of a normal copper path of the printed circuit itself: in particular, the system 1 according to the present invention exploits a differential technique to best guarantee the integrity of treated signals.

Since the communication between the units 3a, 3b is bidirectional and transmission and reception of signals occur, through the system 1 according to the present invention, in base-band without modulation, a specific communication direction is assigned to each one of the pairs 6, 8 of conductive paths.

It must be noted how the distance passing between the pairs of conductive circular paths 6', 6" and 8', 8", placed mutually facing, is not particularly critical and can range up to 3mm: this allows assembling the system 1 according to the present invention also on not particularly accurate machines, with a clear economic advantage.

Moreover, the system 1 according to the present invention comprises at least means 9a, 9b for supplying connecting to the field and digitally processing the transmitted signals, and cooperating with such units 3a, 3b on the slave side (respectively designated as 9a) and on the master side (respectively designated as 9b). In particular, such means 9a, 9b comprise:
- electric supply means (not shown), preferably composed of at least one power supply insulated for internal voltages from plant 24Vdc;
- at least interface means (not shown) for field devices (such as Profibus, Encoder, etc.);
- at least digital processing means (not shown) for generating the data flow under transmission and the extraction of data under reception, such means being preferably composed of suitable logic circuits;
- means (not shown) for managing the internal connection between the electric supply means, the interface means and the digital processing means.

Obviously, the above means 9a, 9b are operatively connected to the units 3a, 3b, and such units are as well operatively and mutually connected through suitable connection means 10: preferably, such connection means 10 are made as connection cables composed of screened twisted pairs that allow a high-frequency communication (20mHz).

Moreover, each unit 3a, 3b is equipped with at least one electric supply means 11 of its own, such means comprising at least one low-power electric power supply.

The means 9a, 9b further cooperate with:
- Input-Output connection means to a field bus, such as for example Profibus DP, respectively designated as 13 and 15 on the Slave side and as 17 and 19 on the Master side: the frequency through such connection is substantially equal to 1.5MHz;
- one or more bidirectional encoders 21, 23, 25;
- one or more means 27, 29, 31 for transmitting signals output from a respective encoder 21, 23, 25.

Advantageously, the system 1 according to the present invention, with suitable adaptations to be applied in particular to the units 3a, 3b, can cover the majority of applications in these sectors, and the chance of using a standard field bus allows using a wide variety of interfaces already available on the market. In particular, when the system 1 according to the present invention is inserted into a field bus like Profibus DP, it is wholly transparent to the user and does not impose any modification, neither hardware nor software, to the network management; this is particulary appreciated by users, since it does not need any preparatory course or any type of study.

Moreover, the system 1 according to the present invention can operate not only, as described above, between two systems rotating one with respect to the other, but also between many systems arranged in series, such as for example in certain machines for producing cables with conductors twisted onto themselves (Twinning Machines): the only need will be providing a low-voltage supply also to the intermediate units, but this is typically capable of being easily performed, since the supply passage is already present for machine power or sensors functions.

As another variation, the system 1 of the present invention can operate also with a single unit (for example 3a) that performs a complete coupling between a fixed part and a rotary part of a machine.

Some preferred embodiments of the invention have been described, but obviusly they are subjected to further modifications and variations within the same inventive idea. In particular, numerous variations and modifications, functionally equivalent to the previous ones, will immediately appear to the skilled people in the art, such variations and modifications falling within the scope of the invention as pointed out by the enclosed claims.

## Claims

1. System (1) for a contact-less transmission of digital data between two mutually-rotating parts of a machine, bidirectionally and without electric continuity between said parts, **characterised in that** it comprises at least one first contact-less data transmitting unit (3a) and at least one second contact-less data transmitting unit (3b), each one of said units (3a, 3b) being composed of at least one pair of plates (5a, 5a' ; 5b, 5b') for a differential and capacitive signal communication that are facing and in relative rotation around a rotation axis (R-R), each one of said plates (5a, 5a'; 5b, 5b') being equipped with at least one first pair (6) of conductive circular paths (6', 6'') concentric to said rotation axis (R-R), and with at least one second pair (8) of conductive circular paths (8', 8") concentric to said rotation axis (R-R), said first pair (6) of conductive paths being independent from said second pair (8) of conductive paths.

2. System (1) for a contact-less transmission of digital data between a fixed part and a rotary part of a machine, bidirectionally and without electric continuity between said parts, **characterised in that** it comprises at least one first contact-less data transmitting unit (3a or 3b), said unit (3a or 3b) being composed of at least one pair of plates (5a, 5a' or 5b, 5b') for a differential and capacitive signal communication that are facing and in relative rotation around a rotation axis (R-R), each one of said plates (5a, 5a' or 5b, 5b') being equipped with at least one first pair (6) of conductive circular paths (6', 6") concentric to said rotation axis (R-R), and with at least one second pair (8) of conductive circular paths (8', 8") concentric to said rotation axis (R-R), said first pair (6) of conductive paths being independent from said second pair (8) of conductive paths.

3. System (1) according to claim 1 or 2, **characterised in that** said conductive circular paths (6', 6") of said first pair (6) of the plates (5a, 5b) are facing said corresponding conductive circular paths (6', 6") of said first pair (6) of the plates (5a', 5b') and said conductive circular paths (8', 8") of said second pair (8) of the plates (5a, 5b) are facing said corresponding conductive circular paths (8', 8") of said second pair (8) of the plates (5a', 5b').

4. System (1) according to claim 1 or 2, **characterised in that** each one of said conductive circular paths (6', 6"; 8', 8") is a copper path of a printed circuit.

5. System (1) according to claim 1 or 2, **characterised in that** a communication between said units (3a, 3b) is bidirectional and a transmission and a reception of signals occur in base-band without modulation.

6. System (1) according to claim 5, **characterised in that** a specific communication direction is assigned to each one of said pairs (6, 8) of conductive paths.

7. System (1) according to any one of the previous claims, **characterised in that** it comprises at least means (9a, 9b) for supplying, field connecting and digital processing of said transmitted signals and cooperating with said units (3a, 3b).

8. System (1) according to claim 7, **characterised in that** said means (9a, 9b) comprise electric supply means, at least interface means for field devices, at least digital processing means for generating the data flow under transmission and for extracting data under reception, and means for managing an internal connection between said electric supply means, said interface means and said digital processing means.

9. System (1) according to any one of the previous claims, **characterised in that** said means (9a, 9b) are operatively connected to said units (3a, 3b) and said units (3a, 3b) are operatively and mutually connected through connection means (10).

10. System (1) according to claim 9, **characterised in that** said connection means (10) are connection cables composed of screened twisted pairs for high-frequency communication.

11. System (1) according to any one of the previous claims, **characterised in that** each one of said units (3a, 3b) is equipped with at least electric supply means (11) of its own.

12. System (1) according to claim 7, **characterised in that** said means (9a, 9b) further cooperate with Input-Output connection means to a field bus (13, 15; 17, 19), one or more bidirectional encoders (21, 23, 25) and one or more means (27, 29, 31) for transmitting signals output from a respective encoder (21, 23, 25).
